# EUROPÄISCHE PATENTANMELDUNG

(11) **EP 1 168 239 A2**
(43) Veröffentlichungstag der Anmeldung: **02.01.2002**
(21) Anmeldenummer: 01114092.8
(22) Anmeldetag: 09.06.2001
(51) Int. Cl.: G06K 19/077, G09F 3/02

(54) **Haftklebe-Etikett**

(30) Priorität: 21.06.2000 AT 10742000
(71) Anmelder: PACHEM Papier - Chem. Produktions Gesellschaft m.b.H. & Co. KG, 6845 Hohenems (AT)
(72) Erfinder: Birkner, Günter, 6840 Götzis (AT)
(74) Vertreter: Hefel, Herbert, Dipl.-Ing.

(57) **Zusammenfassung**

Ein Haftklebe-Etikett ist mit einem an der Vorderseite des Etiketts sichtbaren Aufdruck (2) und an seiner Rückseite mit einer Haftklebstoffschicht (8) versehen, die vor dem Aufbringen des Etiketts auf den zu etikettierenden Gegenstand von einem das Etikett tragenden Trägermaterial abgedeckt ist. Das Haftklebe-Etikett weist einen Transponder auf, der einen Transponder-Chip (4) und eine Antenne (6) umfaßt. Eine Materialbahn (1) des Etiketts trägt sowohl den auf der Vorderseite des Etiketts sichtbaren Aufdruck (2) als auch eine mittels einer leitfähigen Farbe aufgedruckte Antenne (6) sowie den an der Materialbahn (1) befestigten, vorzugsweise aufgeklebten, und mit der Antenne (6) kontaktierten Transponder-Chip (4), wobei diese Materialbahn (1) an ihrer Rückseite mit der Haftklebstoffschicht (8) versehen ist.

## Beschreibung

Die Erfindung betrifft ein Haftklebe-Etikett, welches mit einem an der Vorderseite des Etiketts sichtbaren Aufdruck und an seiner Rückseite mit einer Haftklebstoffschicht versehen ist, die vor dem Aufbringen des Etiketts auf den zu etikettierenden Gegenstand von einem das Etikett tragenden Trägermaterial abgedeckt ist, und welches einen Transponder aufweist, der einen Transponder-Chip und eine Antenne umfaßt.

Weiters betrifft die Erfindung ein Verfahren zur Herstellung eines derartigen Haftklebe-Etiketts.

Selbstklebende Etiketten, die mit einem an ihrer Vorderseite sichtbaren Aufdruck zur Kennzeichnung einer Ware versehen sind, sind in unterschiedlichen Ausführungsformen bekannt. Solche selbstklebenden Etiketten weisen an ihrer Rückseite eine Haftklebstoffschicht auf, die vor dem Gebrauch des Etiketts von einem Trägermaterial abgedeckt ist. Zum Anbringen des Etiketts auf die Verpackung bzw. das Gefäß der zu kennzeichnenden Ware wird das Etikett vom Trägermaterial abgezogen und kann anschließend aufgeklebt werden. Als Aufdruck weisen solche Etiketten u.a. häufig einen Strichcode auf, der von einem Lesegerät an einer Kassa des die Ware anbietenden Geschäfts ablesbar ist.

Ebenfalls bereits bekannt ist ein Etikett der eingangs genannten Art. Solche Etiketten haben den Vorteil, daß die auf ihnen gespeicherten Informationen sehr rasch und einfach von einem entsprechenden Lesegerät auslesbar sind, wobei kein unmittelbarer Sichtkontakt zwischen dem Lesegerät und dem Etikett vorhanden sein muß. Solche Selbstklebeetiketten mit Transponder weisen üblicherweise eine erste Folie auf, auf die auf fotochemischem Weg eine elektrisch leitende, metallische Bahn aufgebracht ist, welche eine Antenne des Transponders bildet.

Auch ein Aufdampfen einer Metallbahn oder ein Aufkleben einer gestanzten Metallbahn ist bekannt. Weiters ist auf diese erste Folie der Transponder aufgeklebt und mit der Antenne elektrisch kontaktiert. Um eine Kontaktierung der beiden Enden der spiralig verlaufenden Antenne mit dem Transponder zu ermöglichen, muß ein Abschnitt einer Leiterbahn auch auf die der Antenne gegenüberliegende Seite der Folie aufgebracht werden, insbesondere auf fotochemischem Weg. Dieser Abschnitt bildet eine Brücke bzw. einen Überkreuzungsabschnitt über die spiralig verlaufenden Windungen der Antenne aus und die auf den beiden Seiten der Folie liegenden Leiterbahnen werden mittels eines Prägeverfahrens verbunden. Diese fotolithographische Aufbringung von Leiterbahnen auf beiden Seiten der Folie und deren Verbindung mittels eines Prägeverfahrens machen die Herstellung eines solchen Etiketts sehr aufwendig.

Mittels einer Klebstoffschicht ist diese erste, die Antenne und den Transponder tragende Folie an der Rückseite einer zweiten Folie angeklebt, welche auf ihrer Vorderseite einen Aufdruck des Etiketts aufweist. An der von der zweiten Folie abgewandten Rückseite der ersten Folie ist weiters eine Schicht eines Haftklebstoffes aufgetragen, die von einem Trägermaterial abgedeckt ist, welches zum Aufkleben des Etiketts von der Rückseite der ersten Folie abgezogen wird. Aufgrund seines Aufbaus und des damit verbundenen Herstellungsaufwandes ist ein derartiges Etikett mit Transponder zu teuer, um mit Konsumgütern wie Lebensmittel verwendet zu werden. Solche Etiketten kommen daher bislang nur im Zusammenhang mit teureren Artikeln zur Anwendung.

Aus der WO 00/21059 und der WO 98/39734 sind weiters Etiketten mit darauf angebrachten elektronischen Speicherbausteinen bekannt. Diese weisen keine Antenne auf, so daß die erfindungsgemäßen Probleme nicht auftreten.

Weiters bekannt sind Chipkarten, beispielsweise Zugangsberechtigungskarten, die mit einem Transponder versehen sind. Diese bestehen in herkömmlicher Weise aus mehreren Folienschichten, die aufeinander auflaminiert sind. Eine dieser Folien, die im Inneren der Chipkarte liegt, trägt die Antenne des Transponders und den Transponder-Chip. Es ist bereits eine Konstruktion bekannt geworden, bei der die Antenne auf diese, die Antenne und den Transponder-Chip tragende Folienschicht mittels einer leitfähigen Druckfarbe auf die Folie aufgedruckt ist. Chipkarten sind wesentlich aufwendiger und insgesamt kostspieliger ausgebildet, als dies bei einem für einen Massenartikel geeigneten Haftklebe-Etikett tragbar wäre.

Aufgabe der Erfindung ist es, ein Haftklebe-Etikett der eingangs genannten Art bereitzustellen, welches wesentlich einfacher als die bekannten Haftklebe-Etiketten dieser Art herstellbar ist und sich aufgrund seiner Kostengünstigkeit auch zur Verwendung mit Konsumgütern bzw. Massenartikeln eignet. Erfindungsgemäß gelingt dies dadurch, daß eine Materialbahn des Etiketts sowohl den auf der Vorderseite des Etiketts sichtbaren Aufdruck als auch eine mittels einer leitfähigen Farbe aufgedruckte Antenne sowie den an der Materialbahn befestigten, vorzugsweise aufgeklebten, und mit der Antenne kontaktierten Transponder-Chip trägt, wobei diese Materialbahn an ihrer Rückseite mit der Haftklebstoffschicht versehen ist.

Ein erfindungsgemäßes Etikett kann somit vorteilhafterweise mit einer einzelnen Materialbahn hergestellt werden, welche bevorzugterweise an ihrer Vorderseite mit dem Aufdruck des Etiketts versehen ist und an ihrer Rückseite eine aufgedruckte Antenne und den Transponder-Chip aufweist sowie mit einer Haftklebstoffschicht versehen ist. Diese kann beispielsweise in einem Klebstofftransferverfahren aufgebracht werden, d.h., die Haftklebstoffschicht wird zunächst auf das Trägermaterial aufgebracht, welches mit der aufgebrachten Haftklebstoffschicht voraus auf die die Antenne und den Transponder tragende Rückseite der Materialbahn aufgesetzt wird. Beim Abziehen des Trägermaterials von der Materialbahn des Etiketts verbleibt die Haftklebstoffschicht auf der Rückseite dieser Materialbahn. Ein erfindungsgemäßes Etikett ist somit vorteilhafterweise in einem durchgängigen Fertigungsprozeß herstellbar.

Weitere Vorteile und Einzelheiten der Erfindung werden im folgenden anhand der beiliegenden Zeichnung erläutert. In dieser zeigen:
- Fig. 1: einen schematischen Querschnitt durch ein Ausführungsbeispiel eines erfindungsgemäßen Etiketts entlang der Linie A-A von Fig. 2;
- Fig. 2: eine Ansicht der Rückseite der Materialbahn des Etiketts (das Trägermaterial ist abgezogen);
- Fig. 3: eine schematische Darstellung eines Ausführungsbeispiels der Arbeitsstationen zur Herstellung des Etiketts und
- Fig. 4: ein Ausführungsbeispiel mit einer Dipolantenne.

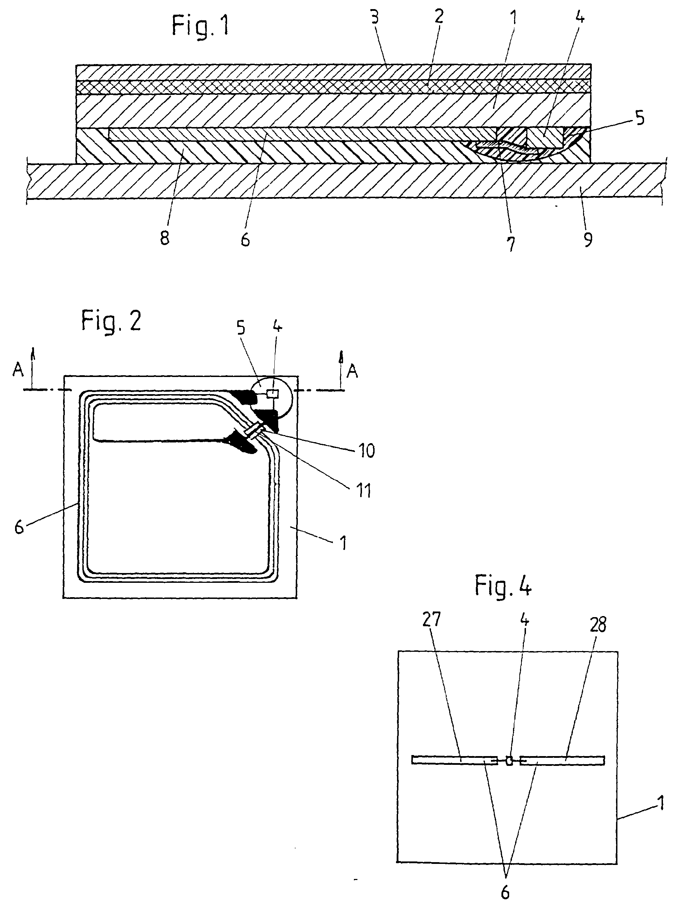

Das in Fig. 1 im Querschnitt schematisch dargestellte Ausführungsbeispiel eines erfindungsgemäßen Etiketts weist eine Materialbahn 1 auf, auf deren Vorderseite ein Aufdruck 2 des Etiketts aufgebracht ist, der von einer Lackschicht 3 abgedeckt ist. Auf der Rückseite der Materialbahn ist ein Transponder-Chip 4 mittels eines Klebstoffs 5 aufgeklebt und eine Antenne 6 des Transponders mittels elektrisch leitfähiger Druckfarbe aufgedruckt, die über elektrische Leiter 7 mit dem Transponder 4 in elektrischem Kontakt steht. Die Rückseite der Materialbahn 1 ist weiters mit einer Haftklebstoffschicht 8 versehen, die von einem Trägermaterial 9 abgedeckt wird. Um das Etikett auf einen zu kennzeichnenden Gegenstand aufzukleben, wird das Trägermaterial 9 von der Haftklebstoffschicht 8 abgezogen, wobei die Haftklebstoffschicht an der Materialbahn 1 verbleibt. Dazu weist das Trägermaterial 9 üblicherweise eine Silikonisierung auf seiner der Haftklebstoffschicht 8 zugewandten Seite auf (nicht dargestellt in Fig. 1). Auf dem Trägermaterial 9 können nebeneinanderliegend mehrere Etiketten angeordnet sein.

Die Dicken der einzelnen Schichten in Fig. 1 sind gegenüber der dargestellten Größe des Etiketts stark übertrieben dargestellt und überdies nicht maßstabgetreu.

Aus Fig. 2 ist nun die Ausbildung der aufgedruckten Antenne 6 genauer ersichtlich. Diese weist mehrere spiralförmig entlang des Randbereiches der Materialbahn 1 verlaufende Windungen auf. Um das innere Ende dieser Windungen mit dem in einem Eckbereich der Materialbahn aufgeklebten Transponder-Chip 4 zu verbinden, weist die Antenne 6 einen Brückenabschnitt 10 auf. Dazu wird zunächst eine isolierende Brücke 11, welche quer über die darunterliegenden Windungen der Antenne 6 verläuft, aufgedruckt. Dazu wird eine elektrisch isolierende Druckfarbe verwendet. Anschließend wird der über die isolierende Brücke 11 verlaufende Brückenabschnitt 10 der Antenne 6 mittels elektrisch leitender Farbe aufgedruckt. Am Transponder-Chip 4 sind zu dessen Kontaktierung elektrische Leiter 7 angebracht. Diese werden mit den beiden Enden der Antenne 6 elektrisch leitend verbunden. Dazu wird nach dem Aufdrucken der Antenne 6 der Transponder 4 an seinem vorbestimmten Platz auf der Materialbahn 1 abgesetzt, wobei die Leiter 7 über die beiden Enden der Antenne 6 gelegt sind. Anschließend wird der Klebstoff 5 auf und um den Transponder 4 und die Leiter 7 aufgebracht.

Die Ausbildung der Antenne 6 ist auch in anderen Gestalten bzw. mit einer unterschiedlichen Anzahl von Windungen denkbar und möglich. Der Transponder kann auch in einem anderen Bereich des Trägermaterials an diesem festgelegt sein, beispielsweise in einem mittleren Bereich des Trägermaterials anstelle des Randbereichs.

Elektrisch leitfähige Farben Druckfarben sind bekannt und kommerziell erhältlich. Die elektrische Leitfähigkeit wird beispielsweise durch den Gehalt an Silberpigmenten oder Graphitpigmenten oder sonstigen leitfähigen Pigmenten bewirkt. Zum Aufdrucken der leitfähigen Druckfarbe wird bevorzugterweise Siebdruck verwendet, um eine ausreichend dicke Schichtdicke der Farbschicht für eine genügende Leitfähigkeit zu erhalten. Es können beispielsweise 90 T-Siebe eingesetzt werden oder Siebe mit noch größerer Maschenweite. Der Aufdruck 2 des Etiketts und die gedruckte Antenne 6 können dabei mit der gleichen Druckmaschine hergestellt werden, beispielsweise mittels einer 8-Farbenmaschine. Fünf dieser acht Farben werden in diesem Fall zum Bedrucken der Vorderseite der Materialbahn 1 verwendet, anschließend wird die Materialbahn gewendet und die Antenne wird mittels der Druckstationen für die drei verbleibenden Farben aufgedruckt, wobei zwei dieser Druckstationen zum Drucken der Brücke 11 und des Brückenabschnitts 10 verwendet werden.

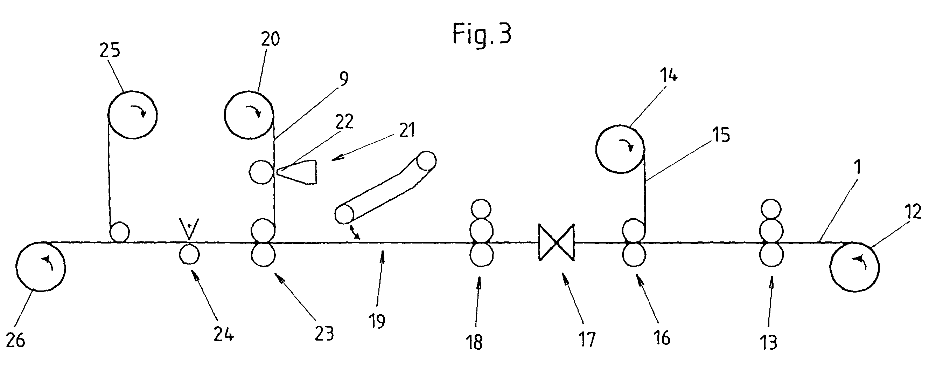

In Fig. 3 sind die Arbeitsstationen zur Herstellung des erfindungsgemäßen Etiketts gemäß einem bevorzugten Herstellungsverfahren schematisch dargestellt. Die das Obermaterial bildende Materialbahn 1 ist zu Rollenware konfektioniert und wird von einer Rolle 12 abgewickelt. In den Druckstationen 13 einer Druckmaschine wird der Aufdruck 2 auf die Vorderseite der Materialbahn 1 aufgebracht. Von der Rolle 14 wird eine Kaschierfolie 15 abgewickelt und in der Arbeitsstation 16 auf die Vorderseite der Materialbahn 1 aufkaschiert. Die Arbeitsstation 16, in der eine Kaschierfolie 15 aufkaschiert wird, könnte auch entfallen. Auch könnte statt dessen eine Arbeitsstation vorgesehen sein, in welcher auf dem Aufdruck 2 auf der Vorderseite der Materialbahn 1 eine Kaschier- oder Schutzlackierung aufgebracht wird.

In der Wendeeinrichtung 17 wird die Materialbahn 1 gewendet, so daß nunmehr ihre Vorderseite in Fig. 3 gesehen nach unten weist. Es folgt der Aufdruck der Antenne 6 sowie der Brücke 11 und des Brückenabschnitts 10 der Antenne auf die Rückseite der Materialbahn in den Druckstationen 18. Diese Druckstationen 18 können zur gleichen Druckmaschine wie die Druckstationen 13 gehören. Es kann sich hierbei auch um eine kombinierte Druckmaschine handeln, welche gemischte Druckverfahren erlaubt, wobei die Antenne, der Brückenabschnitt 10 der Antenne und die Brücke 11 vorzugsweise mittels Siebdruck auf die Materialbahn 1 aufgedruckt werden. Der Aufdruck 2 auf der Vorderseite der Materialbahn 1 kann ebenfalls über Siebdruck oder ein anderes Druckverfahren, wie Tiefdruck, Flexodruck oder Offsetdruck erfolgen.

In der Arbeitsstation 19 erfolgt die Plazierung des Transponder-Chips und dessen Ankleben an der Rückseite der Materialbahn 1, wobei gleichzeitig die elektrischen Leiter 7 des Transponder-Chips 4 mit der Antenne 6 kontaktiert werden.

Von einer Rolle 20 wird ein Trägermaterial 9 abgerollt, welches an seiner der Materialbahn 1 zugewandten Vorderseite üblicherweise silikonisiert ist. Auf diese silikonisierte Vorderseite des Trägermaterials 9 wird in der Arbeitsstation 21 eine Haftklebstoffschicht aufgebracht, welche im fertiggestellten Zustand des Etiketts die an der Rückseite der Materialbahn 1 vorgesehene

Haftklebstoffschicht 8 bilden wird. Dazu wird mittels einer sich über die Breite des Trägermaterials 9 erstreckende Breitschlitzdüse 22 eine entsprechende Klebstoffschicht aufgebracht. Bei dem dazu vorzugsweise verwendeten Klebstoff handelt es sich um einen unter UV-Einstrahlung polymerisierenden Acrylat-Kleber. Der Kleber liegt in Granulatform als Monomer vor, wird durch Erhitzen verflüssigt und über die Breitschlitzdüse 22 als Schicht auf das Trägermaterial 9 aufgetragen. In einer anschließenden UV-Bestrahlungseinrichtung der Arbeitsstation 21 (nicht dargestellt in Fig. 3) polymerisiert der Klebstoff und erhält durch diese Konditionierung seine gewünschten Haftklebeeigenschaften. Die Haftung der Klebstoffschicht auf dem silikonisierten Trägermaterial ist allerdings nur gering, weshalb durch das Zusammenführen des Trägermaterials 9 mit der Materialbahn 1 und das Zusammendrücken dieser Lagen in der Arbeitsstation 23 eine Übertragung dieser Haftklebstoffschicht auf die Rückseite der Materialbahn erfolgt. Bei einem späteren Abziehen des Trägermaterials 9 bleibt die Haftklebstoffschicht 8 daher an der Materialbahn 1 haften, wodurch das Haftklebe-Etikett gebildet wird.

In der Stanzeinrichtung 24 wird die Stanzung der Etiketten durchgeführt, wobei das zwischen den Etiketten auf dem Trägermaterial 9 verbleibende Restmaterial vom Trägermaterial 9 abgezogen wird und zu einer Rolle 25 aufgewickelt wird.

Die fertiggestellten, auf dem Trägermaterial 9 angeordneten Haftklebe-Etiketten werden zu einer Rolle 26 konfektioniert.

Die erfindungsgemäßen Etiketten sind somit in einem durchgängigen Fertigungsprozeß herstellbar. Anstelle des gezeigten Transferverfahrens für die Aufbringung der Haftklebstoffschicht könnte die Haftklebstoffschicht auch direkt auf die Rückseite der Materialbahn 1 aufgebracht werden. Dazu wäre die Arbeitsstation 21 anschließend an die Arbeitsstation 19 zur Plazierung und Befestigung des Transponder-Chips vorzusehen. In diesem Fall wäre es prinzipiell auch denkbar und möglich, den Haftkleber direkt zur Befestigung des Transponders zu verwenden, wodurch ein separater Klebstoff 5 zur Befestigung des Transponders bzw. der elektrischen Leiter auf den Enden der Antenne entfallen könnte.

Die Materialbahn 1 kann einlagig oder mehrlagig ausgebildet sein und aus Papier oder einer Kunststoffolie oder einem mehrlagigen Papier-Kunststoffolienverbund bestehen. Die Fixierung des Transponders und die Kontaktierung der elektrischen Leiter 7 mit der Antenne 6 könnte auch auf eine andere als die beschriebene Weise erfolgen, beispielsweise direkt mittels des die Haftklebstoffschicht 8 bildenden Haftklebers, wobei ein separater Klebstoff 5 entfallen könnte.

In einem weiteren Ausführungsbeispiel der Erfindung kann die Materialbahn 1 aus einer transparenten Folie bestehen und der Aufdruck 2 wird an der Rückseite dieser Folie mittels eines sogenannten Konterdruckverfahrens spiegelverkehrt aufgedruckt. In der Folge wird eine lichtundurchlässige Deckschicht, vorzugsweise aus Deckweiß aufgedruckt. Auf dieser Deckschicht

wird die Antenne 6 aufgedruckt und der Transponder-Chip 4 aufgebracht. In der weiteren Folge wird die Haftklebstoffschicht 8 aufgebracht.

Die Ausbildung der Brücke 11 könnte auch in der Form erfolgen, daß der Transponder-Chip auf einen Streifen aus einem leitfähigen Material aufgeklebt ist. Seitlich über diesen Streifen aus dem leitfähigen Material stehen die Anschlüsse an den Transponder vor. Der Streifen, der an seiner Unterseite mit einer Haftklebstoffschicht versehen sein kann, und die Anschlüsse werden über die Antenne an der Stelle der auszubildenden Brücke aufgeklebt. Zum Aufdrucken der Antenne ist somit bei dieser Ausbildung der Brücke nur eine einzelne Druckstation notwendig.

Auch andere Formen der Antenne sind denkbar und möglich. Wenn eine solche Antenne nur eine einzelne Windung aufweist, entfallen dabei die Brücke 11 und ein Brückenabschnitt 10 der Antenne, so daß nur eine einzelne Druckstation zum Aufdrucken der Antenne notwendig ist. Auch die Verwendung einer sogenannten Dipolantenne kommt hier in Frage. Eine solche weist - wie in Fig. 4 schematisch dargestellt ist - zwei stabförmige Abschnitte 27, 28 auf, wobei der Transponder-Chip 4 zwischen den beiden Abschnitten aufgeklebt ist und mit den beiden Abschnitten kontaktiert ist.

Die Kontaktierung des Transponder-Chips 4 mit den Enden der Antenne könnte auch in der Weise erfolgen, daß die am Transponder-Chip vorgesehenen Kontaktflächen direkt auf die Enden der Antenne aufgelegt werden und der Transponder-Chip in dieser Position mit der Materialbahn verklebt wird. Der Transponder-Chip wäre hierbei im Vergleich zu Fig. 1 in einer um 180° um eine horizontale Achse verschwenkten Position an der Materialbahn 1 festgelegt. Die Befestigung und das Kontaktieren des Transponder-Chips würde dadurch in einem erfolgen.

### Legende zu den Hinweisziffern:

- 1: Materialbahn
- 2: Aufdruck
- 3: Lackschicht
- 4: Transponder-Chip
- 5: Klebstoff
- 6: Antenne
- 7: Leiter
- 8: Haftklebstoffschicht
- 9: Trägermaterial
- 10: Brückenabschnitt
- 11: Brücke
- 12: Rolle
- 13: Druckstation
- 14: Rolle
- 15: Kaschierfolie
- 16: Arbeitsstation
- 17: Wendeeinrichtung
- 18: Druckstation
- 19: Arbeitsstation
- 20: Rolle
- 21: Arbeitsstation
- 22: Breitschlitzdüse
- 23: Arbeitsstation
- 24: Stanzeinrichtung
- 25: Rolle
- 26: Rolle
- 27: Abschnitt
- 28: Abschnitt

## Patentansprüche

1. Haftklebe-Etikett, welches mit einem an der Vorderseite des Etiketts sichtbaren Aufdruck und an seiner Rückseite mit einer Haftklebstoffschicht versehen ist, die vor dem Aufbringen des Etiketts auf den zu etikettierenden Gegenstand von einem das Etikett tragenden Trägermaterial abgedeckt ist, und welches einen Transponder aufweist, der einen Transponder-Chip und eine Antenne umfaßt, **dadurch gekennzeichnet, daß** eine Materialbahn (1) des Etiketts sowohl den auf der Vorderseite des Etiketts sichtbaren Aufdruck (2) als auch eine mittels einer leitfähigen Farbe aufgedruckte Antenne (6) sowie den an der Materialbahn (1) befestigten, vorzugsweise aufgeklebten, und mit der Antenne (6) kontaktierten Transponder-Chip (4) trägt, wobei diese Materialbahn (1) an ihrer Rückseite mit der Haftklebstoffschicht (8) versehen ist.

2. Haftklebe-Etikett nach Anspruch 1, **dadurch gekennzeichnet, daß** der an der Vorderseite des Etiketts sichtbare Aufdruck (2) an der Vorderseite der Materialbahn (1) angebracht ist und die Antenne (6) auf die Rückseite der Materialbahn (1) aufgedruckt ist und mit dem ebenfalls an der Rückseite der Materialbahn (1) angeordneten Transponder-Chip (4) kontaktiert ist.

3. Haftklebe-Etikett nach Anspruch 1, **dadurch gekennzeichnet, daß** der an der Vorderseite des Etiketts sichtbare Aufdruck auf die Rückseite der transparent ausgebildeten Materialbahn (1) aufgedruckt ist, dieser Aufdruck von einer lichtundurchlässigen Deckschicht, vorzugsweise aus Deckweiß, abgedeckt ist und auf der Deckschicht die Antenne (6) aufgedruckt ist und der Transponder-Chip (4) befestigt ist.

4. Haftklebe-Etikett nach einem der Ansprüche 1 bis 3, **dadurch gekennzeichnet, daß** die Materialbahn (1) einlagig ausgebildet ist.

5. Haftklebe-Etikett nach Anspruch 2, **dadurch gekennzeichnet, daß** auf der Vorderseite der Materialbahn (1) eine den Aufdruck (2) überdeckende Deckschicht, vorzugsweise eine Lackschicht (3) oder eine auflaminierte durchsichtige Kaschierfolie (15) aufgebracht ist.

6. Haftklebe-Etikett nach einem der Ansprüche 1 bis 5, **dadurch gekennzeichnet, daß** die Antenne (6) die Form einer Dipolantenne aufweist mit zwei stabförmigen Abschnitten (27, 28), zwischen denen der Transponder-Chip (4) angeordnet ist.

7. Haftklebe-Etikett nach einem der Ansprüche 1 bis 5, **dadurch gekennzeichnet, daß** die Antenne (6) mehrere spiralförmig entlang des Randbereiches der Materialbahn (1) verlaufende Windungen aufweist und daß zur Verbindung der beiden Enden der Antenne mit dem Transponder-Chip (4) mindestens ein Brückenabschnitt (10) der Antenne vorgesehen ist, der über eine aus einer elektrisch isolierenden Druckfarbe hergestellten isolierende Brücke (11) über die darunterliegenden Windungen der Antenne (6) verläuft, wobei der über die isolierende Brücke (11) verlaufende Brückenabschnitt (10) der Antenne (6) von einer aufgedruckten, elektrisch leitenden Farbe gebildet wird.

8. Verfahren zur Herstellung eines Haftklebe-Etiketts, welches mit einem an der Vorderseite des Etiketts sichtbaren Aufdruck und an seiner Rückseite mit einer Haftklebstoffschicht versehen ist, die vor dem Aufbringen des Etiketts auf dem zu etikettierenden Gegenstand von einem das Etikett tragenden Trägermaterial abgedeckt ist, und welches einen Transponder aufweist, der einen Transponder-Chip und eine Antenne umfaßt, **dadurch gekennzeichnet, daß** auf eine Materialbahn (1) des Etiketts sowohl der an der Vorderseite des Etiketts sichtbare Aufdruck (2) als auch mittels einer leitfähigen Farbe die Antenne (6) des Transponders aufgedruckt wird sowie der Transponder-Chip (4) aufgeklebt wird und mit der Antenne kontaktiert wird und in der weiteren Folge die Haftklebstoffschicht aufgebracht wird.

9. Verfahren nach Anspruch 8, **dadurch gekennzeichnet, daß** der an der Vorderseite des Etiketts sichtbare Aufdruck (2) auf die Vorderseite der Materialbahn (1) aufgedruckt wird und die Antenne (6) auf die Rückseite der Materialbahn (1) aufgedruckt wird und der Transponder-Chip (4) ebenfalls an der Rückseite der Materialbahn (1) befestigt wird.

10. Verfahren nach Anspruch 8, **dadurch gekennzeichnet, daß** der an der Vorderseite des Etiketts sichtbare Aufdruck (2) auf die Rückseite der durchsichtig ausgebildeten Materialbahn (1) aufgedruckt wird, dieser Aufdruck mit einer lichtundurchlässigen Deckschicht, vorzugsweise aus Deckweiß, abgedeckt wird und auf die Deckschicht die Antenne (6) aufgedruckt wird.

11. Verfahren nach einem der Ansprüche 8 bis 10, **dadurch gekennzeichnet, daß** das Etikett in einem durchgängigen Fertigungsprozeß hergestellt wird, wobei die Materialbahn (1) zunächst den Druckstationen (13) zum Aufdrucken des an der Vorderseite des Etiketts sichtbaren Aufdrucks (2) sowie den Druckstationen (18) zum Aufdrucken der Antenne (6) zugeführt wird, im weiteren einer Arbeitsstation (19) zum Plazieren, Befestigen und Kontaktieren des Transponder-Chips (4) zugeführt wird, im weiteren in einer Arbeitsstation (23) mit dem Trägermaterial zusammengeführt wird, auf dessen der Materialbahn (1) zugewandten, vorzugsweise silikonisierten, Vorderseite zuvor die Haftklebstoffschicht aufgebracht worden ist, und im weiteren einer Stanzeinrichtung (24) zum Ausstanzen der zwischen den einzelnen Etiketten sich befindenden Teile der Materialbahn (1) zugeführt wird.

12. Verfahren nach einem der Ansprüche 8 bis 10, **dadurch gekennzeichnet, daß** das Etikett in einem durchgängigen Fertigungsprozeß hergestellt wird, wobei die Materialbahn (1) zunächst den Druckstationen (13) zum Aufdrucken des an der Vorderseite des Etiketts sichtbaren Aufdrucks (2) sowie den Druckstationen (18) zum Aufdrucken der Antenne (6) zugeführt wird, im weiteren einer Arbeitsstation (19) zum Plazieren, Befestigen und Kontaktieren des Transponder-Chips (4) zugeführt wird, im weiteren einer Arbeitsstation zum Aufbringen des Haftklebstoffs auf der Rückseite der Materialbahn (1) zugeführt wird, im weiteren mit dem Trägermaterial zusammengeführt wird und im weiteren einer Stanzeinrichtung (24) zum Ausstanzen der zwischen den einzelnen Etiketten sich befindenden Teile der Materialbahn (1) zugeführt wird.
